# EUROPÄISCHE PATENTSCHRIFT

(11) **EP 1 717 606 B1**
(45) Veröffentlichungstag und Bekanntmachung des Hinweises auf die Patenterteilung: **11.12.2019**
(21) Anmeldenummer: 06112569.6
(22) Anmeldetag: 12.04.2006
(51) Int. Cl.: G01V 3/12, G01V 3/15

(54) **Detektor für eingebettete längliche Objekte**
Detector for embedded oblong objects
Détecteur d'objets longitudinaux encastrés

(30) Priorität: 26.04.2005 DE 102005019239
(43) Veröffentlichungstag der Anmeldung: 02.11.2006
(73) Patentinhaber: HILTI Aktiengesellschaft, 9494 Schaan (LI)
(72) Erfinder: Würsch, Christoph, 9470 Werdenberg (CH); Gogolla, Torsten, 9494 Schaan (LI); Winter, Andreas, 6830 Rankweil (AT); Kaneider, Wilfried, 6800 Feldkirch-Tosters (AT); Schmitzer, Harald, 9470 Werdenberg (CH)
(74) Vertreter: Hilti Aktiengesellschaft Corporate Intellectual Property

(56) Entgegenhaltungen:
- WO-A1-97/23786
- WO-A1-2004/042427
- WO-A2-01/18561
- DE-C1- 10 050 655
- GB-A- 2 343 805
- US-A- 5 900 833
- US-A1- 2003 193 429
- GUIDO MANACORDA: "ids radar products for utilities mapping and ground classification", NODIG INTERNATIONAL CONFERENCE, COPENHAGEN, 2002, XP002730621,

## Beschreibung

Die Erfindung bezeichnet einen Detektor für eingebettete längliche Objekte, insbesondere für in Mauerwerk eingebettete Kunststoffrohrleitungen.

Im Baugewerbe spielt die Detektion eingebetteter länglicher Objekte, d.h. sich im Wesentlichen längs einer Dimension erstreckender Objekte, eine wesentliche Rolle, sei es zur Detektion von Armierungseisen, Metallrohren, elektrischen Leitungen oder Kunststoffrohren. So werden eingebettete längliche Objekte bspw. nach der US6541965 über die Änderung der Impedanz eines eingeprägten, magnetischen Nahfeldes, nach der DE10239431 über die Änderung der Impedanz eines eingeprägten, elektrischen Nahfeldes oder nach der US5541605 elektromagnetisch über Radar detektiert und charakterisiert. Da die beiden letztgenannten Messprinzipien physikalisch insbesondere auf die Änderung der Dielektrizitätskonstanten ansprechen, stellt die Detektion von Kunststoffrohrleitungen im Mauerwerk, welche im Frequenzbereich von 1-10 GHz eine relative Dielektrizitätskonstante von ca. 4 bis 8 bzw. von ca. 4.3 aufweist, eine messtechnische Herausforderung dar. Zusätzlich erschwert wird deren Detektion durch die zur Wärmeisolation in Ziegelsteinen eingebrachten Hohlräume im Mauerwerk, da deren Dimension und Lage denen von Kunststoffrohrleitungen ähnlich ist.

Die US5296807 zeigt einen handhabbaren Detektor für eingebettete längliche Objekte mit einem handhabbaren, über eine Fläche verfahrbaren Messkopf für ein eingeprägtes magnetisches Nahfeld, mit einem Wegdetektor sowie mit einer örtlich separaten bildausgebenden Auswerteeinheit, die mit dem Messkopf signalübertragend verbunden ist.

Zudem sind nach der US6600441 bei einem Radardetektor für eingebettete längliche Objekte mehrere, definiert voneinander beabstandete Antennenpaare vorhanden, aus deren einzelnen Radarmesssignalen der Signalprozessor über Korrelationsfunktionen längliche Objekte selektiert und deren Lage in der Ebene ermittelt. Weiter ist aus der WO02063334 ein Radar-Detektor mit einer Patch-Antenne bekannt.

WO01018561 offenbart einen Detektor mit einer Auswerteeinheit und einem Messkopf. Die Auswerteeinheit umfasst ein Rechenmittel und ein Ausgabemittel, der Messkopf ist in einer Scannrichtung über eine Fläche verfahrbar und umfasst einen Wegdetektor und eine Sende-Empfangseinheit. Die Sende-Empfangseinheit umfasst neun Sendeantennen, die in einer ersten Reihe angeordnet sind, und acht Empfangsantennen, die in einer zweiten Reihe angeordnet sind, wobei die erste und zweite Reihe parallel zueinander und senkrecht zur Scannrichtung des Messkopfes verlaufen.

Zudem sind dem Fachmann die modernen Methoden der rechnergestützten Signalverarbeitung insbesondere von zeitbasierten 3-d-Messdaten bekannt, die als solche selbst nicht Gegenstand der Erfindung sind.

Die Aufgabe der Erfindung besteht in der Realisierung eines Detektors für eingebettete längliche Objekte, welcher sich insbesondere für in Mauerwerk eingebettete Kunststoffrohrleitungen eignet.

Die Aufgabe wird im Wesentlichen durch die Merkmale des Anspruchs 1 gelöst. Vorteilhafte Weiterbildungen ergeben sich aus den Unteransprüchen.

So umfasst ein Detektor für eingebettete längliche Objekte eine Auswerteeinheit, die ein Rechenmittel und ein Ausgabemittel aufweist, sowie einen handhabbaren, über eine Fläche in einer Scannrichtung verfahrbaren Messkopf, der einen Wegdetektor und zwei Sende-Empfangseinheiten mit jeweils einer Antenne aufweist, wobei ein in der Fläche gemessener Abstand zwischen den beiden Antennen im Bereich zwischen 5 cm und 50 cm, optimal bei 15 cm, liegt, und somit einer Standardhöhe von Mauerziegeln entspricht. Der Detektor ist erfindungsgemäß dadurch gekennzeichnet, dass der Messkopf mit um 180° schwenkbar aufklappbaren Schenkeln ausgebildet ist, wobei die zwei Sende-Empfangseinheiten mit ihren Antennen jeweils auf verschiedenen Schenkeln angeordnet sind. Dabei ist es der Erfindung unbenommen und von dieser mit umfasst, ob die Auswerteinheit mit dem Messkopf eine integrale Baueinheit ausbildet oder ob diese als zwei separate Baueinheiten ausgebildet sind, die zumindest zeitweise miteinander datenübertragend verbunden sind.

Durch den Abstand zweier Antennen mit einer Standardhöhe von Mauerziegeln, welche auch den Abstand in Ziegelreihen benachbarter Mauerziegel im Mauerverbund eines auf eingebettete längliche Objekte zu untersuchende Mauerwerkes bestimmt, erfassen die von den beiden beabstandeten Antennen gemessenen Messsignale die eingebetteten Objekte verschiedener Mauerziegel. Da diese Mauerziegel üblicherweise horizontal versetzt im Mauerverbund angeordnet sind, wobei deren möglicherweise periodisch integrierte Hohlräume vertikal verlaufen, ist die Lageversetzung je eines Hohlraumes in zwei vertikal übereinander angeordneten Mauerziegeln statistisch verteilt, wohingegen sich vertikal eingebettete längliche Objekte wie Kunststoffrohrleitungen üblicherweise über mehrere Ziegelreihen hinweg erstrecken. Somit lässt sich nach dem Scannen längs einer Scannrichtung in der Fläche eines zu untersuchenden Gebietes durch eine Verrechnung beider Messsignale aus unterschiedlichen Ziegelreihen zwischen Hohlräumen in Mauerziegeln und eingebetteten länglichen Objekten unterscheiden, da sich die relativen Signalanteile der Hohlräume sich statistisch nicht phasengleich aufakkumulieren und somit bezüglich der Signalanteile der eingebetteten länglichen Objekte abschwächen.

Beim erfindungsgemäßen Detektor sind zwei Sende-Empfangseinheiten vorhanden, denen jeweils genau eine Antenne zugeordnet ist, wodurch ein Umschaltmittel zwischen den Antennen verzichtbar ist und eine modulare Bauweise des Detektors möglich ist. Der Messkopf umfasst die um 180° schwenkbar aufklappbaren Schenkel, wobei die zwei Sende-Empfangseinheiten jeweils auf verschiedenen Schenkeln des Messkopfes angeordnet sind, wodurch im zusammengeklappten Zustand die Baulänge verkürzt ist.

Vorteilhaft ist die Sende-Empfangseinheit als Radar-Sende-Empfangseinheit ausgebildet, weiter vorteilhaft mit einer relativen Bandbreite im Bereich von 0,5 bis 1.0 im Frequenzbereich zwischen 500 MHz und 10 GHz, wodurch in Baumaterialien eingebettete Objekte in hinreichender Tiefe zuverlässig detektierbar sind. Indem die Wellenlänge des Radars und dessen Bandbreite derart gewählt wird, lassen sich die Hohlräume der Mauerziegel bzw. die Kunststoffrohrleitungen auflösen.

Vorteilhaft sind die zwei Antennen jeweils als monostatische, breitbandige Dipol-Antennen (bspw. Patch-Antennen), weiter vorteilhaft mit gleich orientierter Polarisationsrichtung, ausgebildet, wodurch eine maximale Empfindlichkeit für sich senkrecht zur Scannrichtung ersteckende längliche Objekte erreicht wird.

Vorteilhaft ist im Messkopf zusätzlich zumindest ein weiterer, andersartiger Sensor angeordnet, wodurch ein detektiertes Objekt vom Rechenmittel mit zwei unterschiedlichen Messverfahren charakterisiert werden kann, wodurch die Zuverlässigkeit der Charakterisierung erhöht wird.

Vorteilhaft erstreckt sich der weitere Sensor symmetrisch um genau zwei Antennen herum, wodurch der induktive Sensor bezüglich seiner Messposition an der Mittelposition der beiden Antennen angeordnet ist.

Alternativ vorteilhaft erstreckt sich der weitere Sensor symmetrisch um jeweils genau eine Antenne herum, wodurch diese bezüglich einer gleichen Messposition koaxial ineinander verschachtelt sind.

Vorteilhaft ist der weitere Sensor ein induktiver Sensor, weiter vorteilhaft bestehend aus einer Erregerspule und als Empfänger aus zwei differentiell verschalteten Empfängerspulen oder mehreren Fluxgate-Sensoren oder magnetoresistiven Sensoren, wodurch zur Detektion von Hohlräumen oder Kunststoffrohrleitungen von der Tatsache Gebrauch gemacht wird, dass Mauerziegel im Vergleich zu Beton relativ stark magnetisch sind, da sie gebranntem Ton beinhalten, der normalerweise eisenhaltigen Magnetit ist. Diese Eisenanteile werden während des Brennens zu magnetischem Magnetit umwandelt.

Vorteilhaft ist der induktive Sensor als Ferritkreuz mit je zwei unterschiedlichen Flusspfaden in Scannrichtung und senkrecht zu dieser ausgebildet, wodurch ein 3-d Induktionsmesssignal erhalten wird.

Vorteilhaft ist der Abstand der beiden Antennen an das zu untersuchende Mauerwerk anpassbar, insbesondere ist der Abstand der beiden Antennen an den Abstand von Mauerziegeln in Ziegelreihen anpassbar.

Vorteilhaft ist an jedem Schenkel zumindest ein, an der zu untersuchenden Fläche abrollbares, Rad angeordnet, weiter vorteilhaft insgesamt genau drei zueinander längs der Schwenkachse versetzt, wodurch im aufgeklappten Zustand eine kippfreie Dreipunktauflage erzielt wird und im zusammengeklappten Zustand die drei Räder ineinander verschachtelt sind.

Vorteilhaft ist zumindest ein Rad je Schenkel mit dem Wegdetektor, bspw. einem Inkrementalweggeber oder optischen Korrelationssensor, verbunden, wodurch neben der Positionsänderung des Messkopfes zusätzlich dessen Lageänderung in der Fläche detektierbar ist.

Die Erfindung wird bezüglich vorteilhafter Ausführungsbeispiele näher erläutert mit:
Fig. 1 als Detektor
Fig. 2a, Fig. 2b als Messkopf
Fig. 3a, Fig. 3b als alternativer Messkopf
Fig. 4, Fig. 5 als Detektor mit separatem, aufklappbaren Messkopf
Fig. 6 als Messverfahren in einem nicht-erfindungsgemäßen Beispiel
Fig. 7 als alternatives Messverfahren in einem nicht-erfindungsgemäßen Beispiel
Fig. 8 als diskrete zweidimensionale Cross-Korrelation

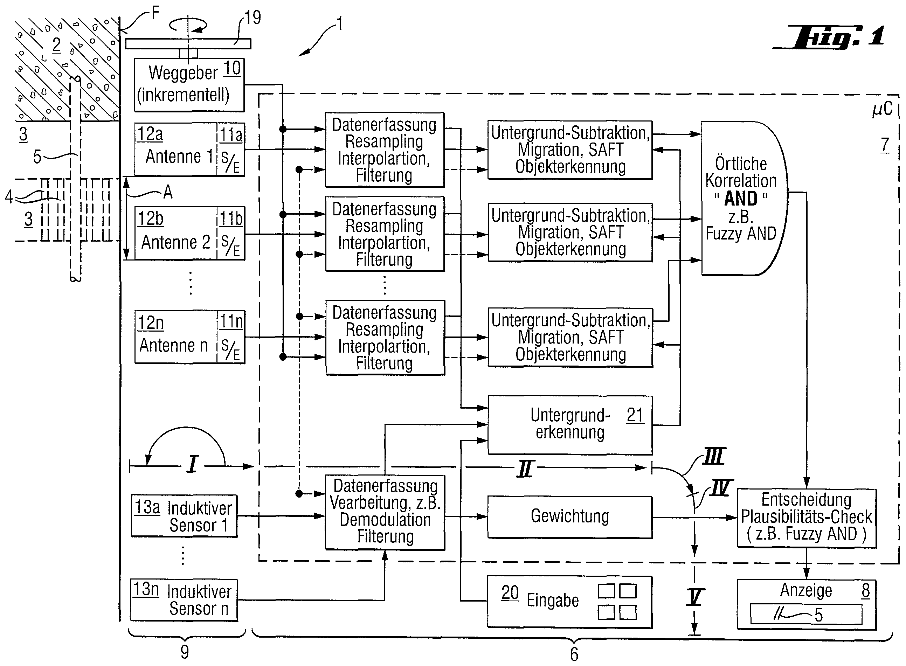

Nach Fig. 1 weist ein schematisch dargestellter Detektor 1 für in ein Mauerwerk 2 mit Mauerziegeln 3 mit Hohlräumen 4 eingebettete längliche Objekte 5 in Form von Kunststoffrohrleitungen eine Auswerteeinheit 6 mit einem Rechenmittel 7 in Form eines Mikrocontrollers µC, einem Ausgabemittel 8 in Form einer bildgebenden Anzeige und einem Eingabemittel 20 in Form von Tasten sowie mit einem über eine Fläche F (senkrecht zur Darstellungsebene) verfahrbaren Messkopf 9 mit einem Wegdetektor 10 in Form eines mit einem Rad 19 verbundenen inkrementellen Weggebers und mehreren Sende-Empfangseinheiten 11a, 11b, 11n mit mehreren voneinander in der Fläche F beabstandeten Antennen 12a, 12b ... 12n auf, wobei der in der Fläche F gemessene Abstand A zweier Antennen 12a, 12b bei 15 cm liegt, und somit einer Standardhöhe von Mauerziegeln 3 entspricht. Die Auswerteeinheit 6 bildet mit dem Messkopf 9 eine miteinander datenübertragend verbundene, handhabbare integrale Baueinheit aus. Die mehreren Sende-Empfangseinheiten 11a, 11b, 11n sind als Radar-Sende-Empfangseinheiten mit einer relativen Bandbreite von 1.0 im Frequenzbereich zwischen 500 MHz und 10 GHz ausgebildet, denen jeweils genau eine Antenne 12a, 12b, 12n zugeordnet ist. Zudem sind mehrere weitere, andersartige Sensoren 13a ... 13n vorhanden, die als induktive Sensoren ausgebildet sind.

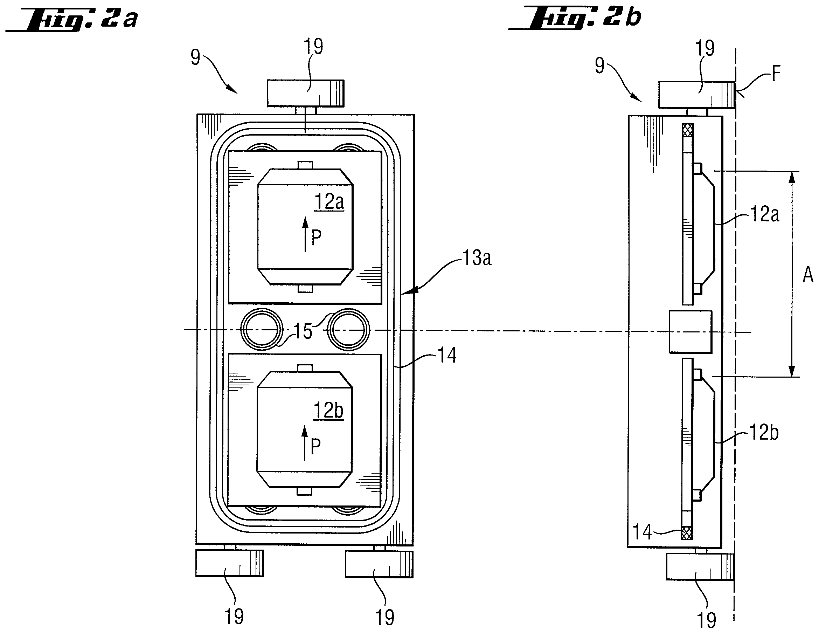

Nach den Fig. 2a, Fig. 2b ist bei einem im Aufriss und schematischem Längsschnitt schematisch dargestellten Messkopf 9 mit genau drei, an der zu untersuchenden Fläche F abrollbaren, Rädern 19 und mit genau zwei im Abstand A in der Fläche F zueinander versetzt angeordneten Antennen 12a, 12b, welche jeweils als monostatische Patch-Antennen mit gleich orientierter Polarisationsrichtung P ausgebildet sind, ein weiterer, andersartiger Sensor 13a in Form eines induktiven Sensors zugeordnet, der symmetrisch um die beiden Antennen 12a, 12b herum angeordnet ist und aus einer Erregerspule 14 und mehreren einzelnen, differentiell verschalteten Empfängerspulen 15 besteht.

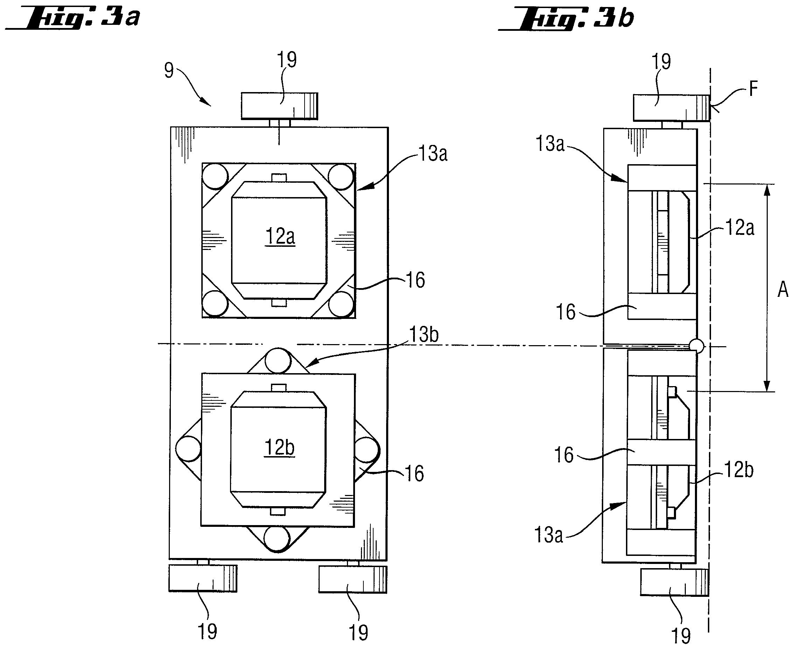

Nach den Fig. 3a, Fig. 3b ist bei einem im Aufriss und schematischem Längsschnitt schematisch dargestellten alternativen Messkopf 9 mit genau drei, an der zu untersuchenden Fläche F abrollbaren, Rädern 19 und mit genau zwei im Abstand A in der Fläche F zueinander versetzt angeordneten Antennen 12a, 12b, jeder Antenne 12a, 12b jeweils ein weiterer, andersartiger Sensor 13a, 13b in Form eines induktiven Sensors zugeordnet, dessen Ferritkreuz 16 sich jeweils symmetrisch um genau eine Antenne 12a, 12b herum erstreckt. Zudem sind die Sensoren 13a, 13b zueinander um 45° in der Fläche F verdreht angeordnet.

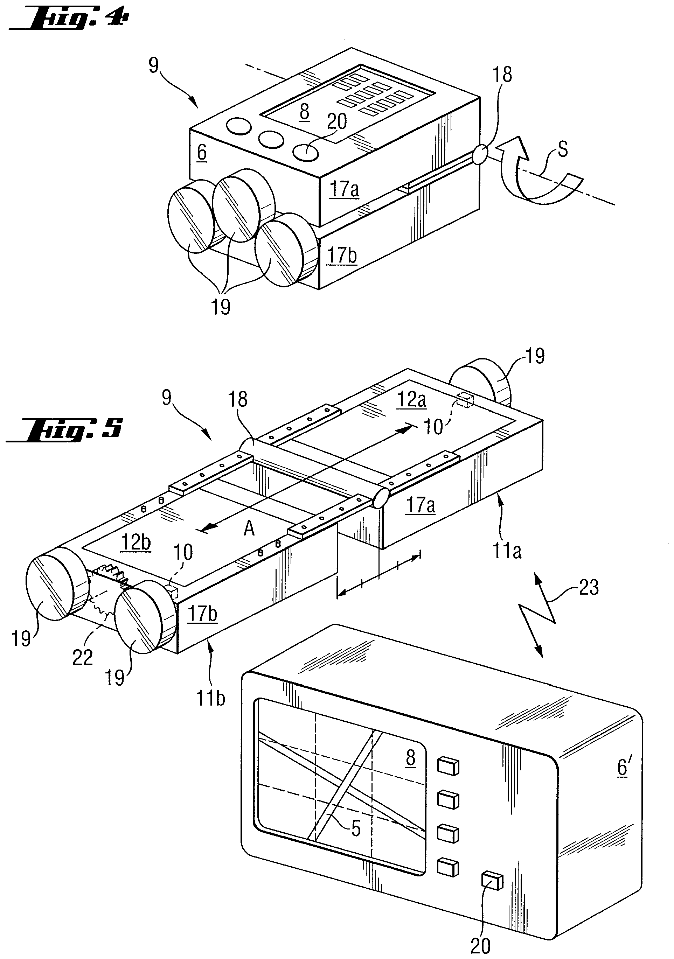

Nach den Fig. 4, Fig. 5 ist ein separat handhabbarer Messkopf 9 mit zwei gegeneinander um 180° um eine Schwenkachse S schwenkbar aufklappbaren Schenkeln 17a, 17b ausgebildet.

Die zwei Antennen 12a, 12b sind jeweils auf verschiedenen Schenkeln 17a, 17b angeordnet. Dabei ist das Schwenkscharnier 18 bezüglich der beiden innenliegenden Sende-Empfangseinheiten 11a, 11b mit den Antennen 12a, 12b versetzt festlegbar, wodurch der Abstand A der Antennen 12a, 12b veränderbar ist. An dem Schenkel 17a ist genau ein Rad 19 und an dem Schenkel 17b sind genau zwei Räder 19 am Rand überstehend angeordnet, die im zusammengeklappten Zustand längs der Schwenkachse S versetzt, zueinander verschachtelt angeordnet sind. Dabei ist je ein Rad 19 je Schenkel 17a, 17b mit dem Wegdetektor 10 verbunden, wobei die beiden Räder 19 des Schenkels 17b über ein innenliegendes Zahnrad 22 starr miteinander drehgekoppelt sind. Ein als integrierte Auswerteeinheit 6 ausgeführter Schenkel 17a des handhabbaren Messkopfes 9 weist ein integriertes Ausgabemittel 8 in Form einer bildgebenden Anzeige und integrierte Eingabemittel 20 in Form von Tasten auf. Der Messkopf 9 ist zudem über eine geeignete drahtlose (Funk, IR) bidirektionale Datenübertragung 23 mit einer als separate Baueinheit ausgeführten Auswerteeinheit 6' verbunden, die das Ausgabemittel 8 in Form einer bildgebenden Anzeige für die vermuteten eingebetteten länglichen Objekte 5 und das Eingabemittel 20 in Form von Tasten aufweist.

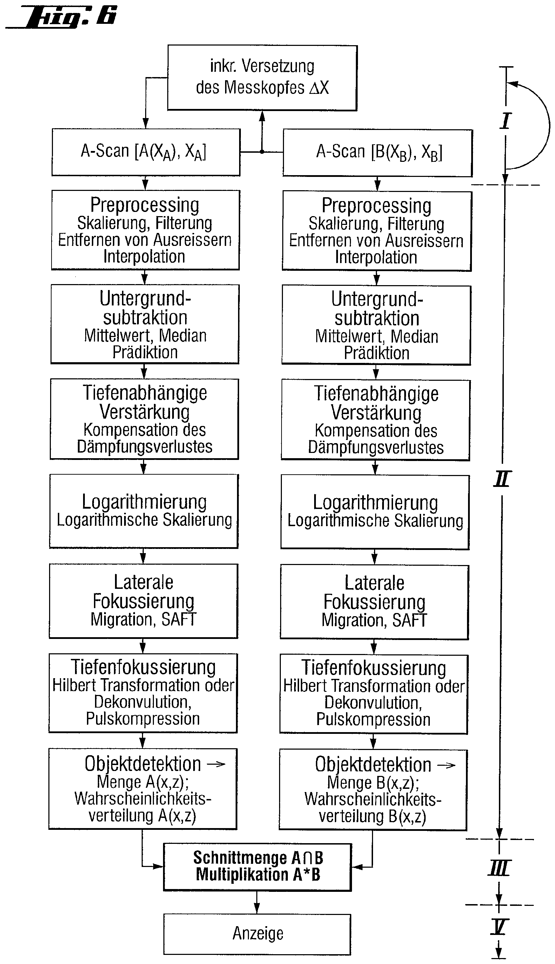

Nach Fig. 6 wird im zugeordneten Messverfahren von einem Detektor 1 in einem mehrfach wiederholten ersten Schritt I die Positionsänderung Δx eines längs einer Scannrichtung in der Fläche F versetzbaren Messkopfes 9 sowie von zwei Antennen 12a, 12b jeweils ein Einzelmesssignal A(x_{A}), B(x_{B}) in Form eines A-Scans erfasst, denen jeweils ihre Positionen x_{A}, x_{B} zugeordnet sind, in einem zweiten Schritt II wird von dem Rechenmittel über einen Algorithmus aus den zwei Einzelmesssignalen A(x_{A}), B(x_{B}) für jede Position x_{A}, x_{B} jeweils ein Einzelmessergebnis A[A(x_{A}), x_{A}], B[B(x_{B}), x_{B}] ermittelt, welches mögliche eingebettete Objekte im Einzelmesssignal A(x_{A}), B(x_{B}) identifizierbar beinhaltet. Dabei werden im zweiten Schritt II wahlweise einzeln (entsprechend automatischer Untergrunderkennung, gezielter Modiwahl durch Nutzereingabe) vom Rechenmittel übliche Signalverarbeitungsmethoden in der Reihenfolge durchgeführt: Preprozessing, Untergrundsubtraktion, Kompensation des Dämpfungsverlustes, Logarithmierung, laterale Fokussierung und Tiefenfokussierung. Anschliessend werden zur Objektdetektion von dem Rechenmittel mehrere Einzelmessergebnisse A[A(x_{A}), x_{A}], B[B(x_{B}), x_{B}] mit ihren Positionen x_{A}, x_{B} miteinander zu je einem Objektergebnis A(x, z), B(x, z) an den Positionen x und Tiefen z verrechnet, entweder in Form einer BOOLEschen 3-d-Menge oder in Form von 3-d-Wahrscheinlichkeitsverteilungen, welche unscharf (FUZZY) die Objektwahrscheinlichkeiten beinhalten. In einem dritten Schritt III werden diese zwei Objektergebnisse A(x, z), B(x, z) von dem Rechenmittel jeweils miteinander zu einem Korrelationsmessergebnis A ∩ B bzw. A * B verrechnet, indem entweder die 3-d-Schnittmenge A ∩ B durch Bildung der Durchschnittsmenge aus den 3-d-Mengen bzw. eine überlagerte 3-d-Wahrscheinlichkeitsverteilung durch Multiplikation A * B der beiden einzelnen 3-d-Wahrscheinlichkeitsverteilungen ermittelt wird. In einem hier direkt nachfolgenden fünften Schritt V wird von dem Rechenmittel das Korrelationsmessergebnis A ∩ B bzw. A * B mit der Position x und Tiefe z zu einem auswählbaren Ergebnisbild verrechnet, welches an einem graphischen Ausgabemittel der Auswerteeinheit ausgegeben wird.

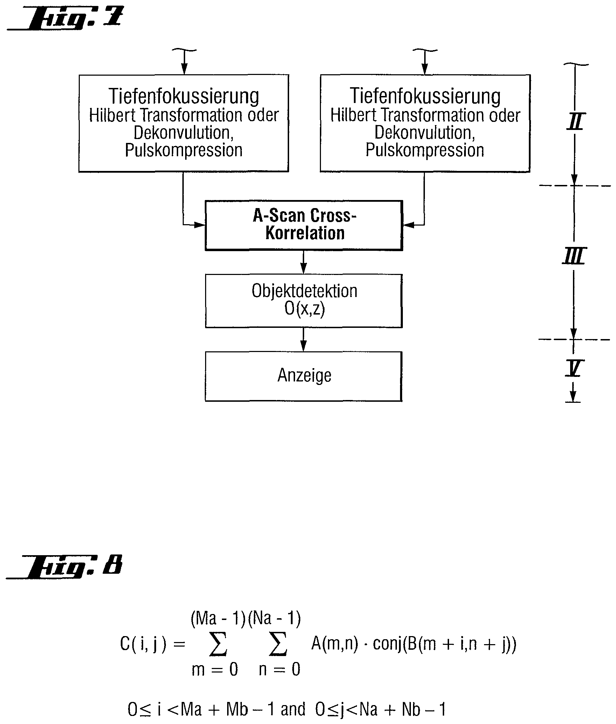

Nach Fig. 7 wird in einem nur bezüglich Fig. 6 auszugsweise abgewandelten sowie dargestellten alternativen Messverfahren im zweiten Schritt II im Anschluss an die mit der Tiefenfokussierung endende Signalverarbeitung im dritten Schritt III für jede Position eine diskrete, zweidimensionale A-Scan Cross-Korrelation der beiden Einzelmessergebnisse A[A(x_{A}), x_{A}], B[B(x_{B}), x_{B}] zu einem gemeinsamen Korrelationsergebnis durchgeführt, bevor darin eine Objektdetektion vorgenommen und das gemeinsame Objektergebnis O(x, z) berechnet wird, das im fünften Schritt V mit der Position x und Tiefe z zu einem Ergebnisbild verrechnet wird, welches an einem graphischen Ausgabemittel der Auswerteeinheit ausgegeben wird.

Nach Fig. 8 wird in der Signalverarbeitung allgemein bei der diskreten, zweidimensionalen Cross-Korrelation das Korrelationsmessergebnis in Form einer Korrelationsmatrix C(i, j) bestimmt, wobei Ma und Na die Dimensionen der Matrix A, Mb und Nb die Dimensionen der Matrix B sowie i, j, m, n laufende Indices sind.

Nach dem in Fig. 1 dargestellten Messverfahren wird von dem Rechenmittel in einem sich an den dritten Schritt III anschliessenden vierten Schritt IV eine Endscheidung durchgeführt, ob an einer Position ein Objekt detektiert wurde. Dabei wird das mittels einer diskreten örtlichen Korrelation AND ermittelte Korrelationsmessergebnis mit einem Zusatzmessergebnis, welches im ersten Schritt I zusätzlich mit mehreren Sensoren 13a, 13n, die als induktive Sensoren ausgebildet sind, als Zusatzmesssignal ermittelt und im zweiten Schritt II zu einem Zusatzmessergebnis verarbeitet wurde, wobei über die Demodulation zusätzlich auf eine Netzfrequenz (50 Hz bzw. 60 Hz) detektiert wurde, gewichtet mit in den Plausibilitäts-Check einbezogen und zu einem Kombinationsmessergebnis kombiniert. Überschreitet das Kombinationsmessergebnis einen bestimmten Schwellwert, wird an dieser Position ein eingebettetes Objekt 5 vermutet und dies in der Anzeige graphisch dargestellt. Alle Einzelmessergebnisse und das Zusatzmessergebnis werden zudem einer automatischen bzw. vom Nutzer über die Eingabemittel 20 steuerbaren Untergrunderkennung 21 zugeführt, welche abhängig davon die einzelnen Teilschritte der Signalverarbeitung der Einzelmesssignale steuert.

## Patentansprüche

1. Detektor für eingebettete längliche Objekte (5) mit einer Auswerteeinheit (6), die ein Rechenmittel (7) und ein Ausgabemittel (8) aufweist, sowie mit einem handhabbaren, über eine Fläche (F) in einer Scannrichtung verfahrbaren Messkopf (9), der einen Wegdetektor (10) und zwei Sende-Empfangseinheiten (11a, 11b) mit jeweils einer Antenne (12a, 12b) aufweist, wobei ein in der Fläche (F) gemessener Abstand (A) zwischen den Antennen (12a, 12b) im Bereich zwischen 5 cm und 50 cm liegt, **dadurch gekennzeichnet, dass** der Messkopf (9) mit um 180° schwenkbar aufklappbaren Schenkeln (17a, 17b) ausgebildet ist, wobei die zwei Sende-Empfangseinheiten (11a, 11b) mit ihren Antennen (12a, 12b) jeweils auf verschiedenen Schenkeln (17a, 17b) angeordnet sind.

2. Detektor nach Anspruch 1, **dadurch gekennzeichnet, dass** die Sende-Empfangseinheit (11a) als Radar-Sende-Empfangseinheit ausgebildet ist, optional mit einer relativen Bandbreite im Bereich von 0,5 bis 1.0 im Frequenzbereich zwischen 500 MHz und 10 GHz.

3. Detektor nach Anspruch 2, **dadurch gekennzeichnet, dass** die zwei Antennen (12a, 12b) jeweils als monostatische, breitbandige Dipol-Antennen, optional mit gleich orientierter Polarisationsrichtung (P), ausgebildet sind.

4. Detektor nach einem der Ansprüche 1 bis 3, **dadurch gekennzeichnet, dass** im Messkopf (9) zusätzlich zumindest ein weiterer, andersartiger Sensor (13a) angeordnet ist.

5. Detektor nach Anspruch 4, **dadurch gekennzeichnet, dass** sich der weitere Sensor (13a) symmetrisch um genau zwei Antennen (12a, 12b) herum erstreckt.

6. Detektor nach Anspruch 4, **dadurch gekennzeichnet, dass** sich zwei weitere Sensoren (13a, 13b) jeweils symmetrisch um genau eine Antenne (12a, 12b) herum erstrecken.

7. Detektor nach einem der Ansprüche 4 bis 6, **dadurch gekennzeichnet, dass** der weitere Sensor (13a) ein induktiver Sensor ist.

8. Detektor nach Anspruch 7, **dadurch gekennzeichnet, dass** der induktive Sensor als Ferritkreuz (16) mit je zwei unterschiedlichen Flusspfaden in Scannrichtung und senkrecht zu dieser ausgebildet ist.

9. Detektor nach einem der Ansprüche 1 bis 8, **dadurch gekennzeichnet, dass** die beiden Antennen (12a, 12b) zueinander längs der Schenkel (17a, 17b) versetzbar festlegbar angeordnet sind.

10. Detektor nach Anspruch 9, **dadurch gekennzeichnet, dass** an jedem Schenkel (17a, 17b) zumindest ein, an der zu untersuchenden Fläche (F) abrollbares, Rad (19) angeordnet ist, optional insgesamt genau drei zueinander längs der Schwenkachse (S) versetzte Räder (19).

11. Detektor nach Anspruch 10, **dadurch gekennzeichnet, dass** je Schenkel (17a, 17b) zumindest ein Rad (19) mit dem Wegdetektor (10) verbunden ist.

## Claims

1. Detector for embedded, elongated objects (5) with an evaluation unit (6), which has a computing means (7) and an output means (8), as well as a handheld measuring head (9) that is movable over an area (F) in a scanning direction, which has a path detector (10) and two transmitting/receiving units (11a, 11b) each with an antenna (12a, 12b), in which a distance (A) measured in the area (F) between the antennas (12a, 12b) is in the range of between 5 cm and 50 cm, **characterised in that** the measuring head (9) is configured with folding legs (17a, 17b) that can pivot around 180°, in which the two transmitting/receiving units (11a, 11b) are arranged with their antennas (12a, 12b) each on different legs (17a, 17b).

2. Detector according to claim 1, **characterised in that** the transmitting/receiving unit (11a) is configured as a radar transmitting/receiving unit, optionally with a relative bandwidth in the range from 0.5 to 1.0 in the frequency range between 500 MHz and 10 GHz.

3. Detector according to claim 2, **characterised in that** the two antennas (12a, 12b) are each configured as monostatic, broadband, dipole antennas, optionally with a polarisation direction (P) oriented in the same way.

4. Detector according to one of claims 1 to 3, **characterised in that** at least one additional sensor (13a) of a different type is also arranged in the measuring head (9).

5. Detector according to claim 4, **characterised in that** the additional sensor (13a) extends symmetrically around exactly two antennas (12a, 12b).

6. Detector according to claim 4, **characterised in that** two additional sensors (13a, 13b) each extend symmetrically around exactly one antenna (12a, 12b).

7. Detector according to one of claims 4 to 6, **characterised in that** the additional sensor (13a) is an inductive sensor.

8. Detector according to claim 7, **characterised in that** the inductive sensor is configured as a ferrite cross (16) with two different flow paths in the scanning direction and perpendicular to it.

9. Detector according to one of claims 1 to 8, **characterised in that** both antennas (12a, 12b) are arranged so that they may be fixed offset to each other along the legs (17a, 17b).

10. Detector according to claim 9, **characterised in that** at least one wheel (19) which is rolla-ble on the area (F) to be examined is arranged on each leg (17a, 17b), optionally with a total of exactly three wheels (19) offset to each other along the pivot axis (S).

11. Detector according to claim 10, **characterised in that** each leg (17a, 17b) is connected to at least one wheel (19) with the path detector (10).

## Revendications

1. Détecteur pour des objets allongés enrobés (5) ayant une unité d'évaluation (6) comportant des moyens de calcul (7) et des moyens de sortie (8), ainsi qu'une tête de mesure (9) portable et pouvant être déplacée au-dessus d'une surface (F) dans une direction de balayage, laquelle tête de mesure comporte un détecteur de trajet (10) et deux unités d'émission-réception (11a, 11b) ayant chacune une antenne (12a, 12b), dans lequel une distance (A) mesurée dans la surface (F) entre les antennes (12a, 12b) est dans la plage comprise entre 5 cm et 50 cm, **caractérisé en ce que** la tête de mesure (9) est formée avec des volets (17a, 17b) dépliables et pouvant pivoter à 180°, dans lequel les deux unités d'émission-réception (11a, 11b) avec leurs antennes (12a, 12b) sont respectivement agencées sur des volets (17a, 17b) différents.

2. Détecteur selon la revendication 1, **caractérisé en ce que** l'unité d'émission-réception (11a) est formée comme une unité d'émission-réception radar, facultativement avec une largeur de bande relative dans la plage de 0,5 à 1,0 dans la plage de fréquences comprise entre 500 MHz et 10 GHz.

3. Détecteur selon la revendication 2, **caractérisé en ce que** les deux antennes (12a, 12b) sont respectivement formées comme des antennes dipolaires à large bande, monostatiques, facultativement avec une direction de polarisation (P) orientée à l'identique.

4. Détecteur selon l'une des revendications 1 à 3, **caractérisé en ce qu'**au moins un capteur supplémentaire (13a) de type différent est de plus agencé dans la tête de mesure (9).

5. Détecteur selon la revendication 4, **caractérisé en ce que** le capteur supplémentaire (13a) s'étend symétriquement autour d'exactement deux antennes (12a, 12b) .

6. Détecteur selon la revendication 4, **caractérisé en ce que** deux capteurs supplémentaires (13a, 13b) s'étendent respectivement symétriquement autour d'exactement une antenne (12a, 12b).

7. Détecteur selon l'une des revendications 4 à 6, **caractérisé en ce que** le capteur supplémentaire (13a) est un capteur inductif.

8. Détecteur selon la revendication 7, **caractérisé en ce que** le capteur inductif est formé comme une croix en ferrite (16) avec deux trajets de flux respectivement différents dans la direction de balayage et orthogonaux à celle-ci.

9. Détecteur selon l'une des revendications 1 à 8, **caractérisé en ce que** les deux antennes (12a, 12b) sont agencées de manière à pouvoir être déplacées l'une par rapport à l'autre le long des volets (17a, 17b).

10. Détecteur selon la revendication 9, **caractérisé en ce que** sur chaque volet (17a, 17b) est agencée au moins une roue (19) pouvant rouler sur la surface (F) à examiner, facultativement exactement trois roues (19) au total décalées longitudinalement les unes des autres le long de l'axe de pivotement (S).

11. Détecteur selon la revendication 10, **caractérisé en ce qu'**au moins une roue (19) par volet (17a, 17b) est reliée au détecteur de trajet (10).
